Europäisches Patentamt

(19) **European Patent Office**

**Office européen des brevets**

(11) Publication number: **0 234 920 B1**

(12) # EUROPEAN PATENT SPECIFICATION

(45) Date of publication of patent specification: **22.07.92**   (51) Int. Cl.5: **F16L 55/18, B23P 15/26**

(21) Application number: **87301597.8**

(22) Date of filing: **24.02.87**

(54) **Method for remotely replacing tube ends in a heat exchange.**

(30) Priority: **24.02.86 US 831889**
**24.02.86 US 832545**
**24.02.86 US 833624**
**24.02.86 US 831888**

(43) Date of publication of application:
**02.09.87 Bulletin 87/36**

(45) Publication of the grant of the patent:
**22.07.92 Bulletin 92/30**

(84) Designated Contracting States:
**BE ES FR GB NL**

(56) References cited:
**DE-A- 2 850 071**      **DE-A- 2 932 055**
**US-A- 3 183 939**      **US-A- 3 962 767**
**US-A- 3 979 810**      **US-A- 4 000 556**
**US-A- 4 161 810**

(73) Proprietor: **FOSTER WHEELER ENERGY CORPORATION**
**110 South Orange Avenue**
**Livingston New Jersey 07039(US)**

(72) Inventor: **Rabe, George B.**
**2 Fairway Trail**
**Sparta New Jersey(US)**

(74) Representative: **Bowman, Paul Alan et al**
**LLOYD WISE, TREGEAR & CO. Norman House 105-109 Strand**
**London WC2R OAE(GB)**

**EP 0 234 920 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention pertains to remotely replacing deteriorated tube ends in a heat exchanger. It pertains particularly to a method and apparatus for remotely removing the deteriorated end portion of an existing tube from a tubesheet of a heat exchanger and replacing it with a new tube aligned and welded to the end of the existing tube and to the tubesheet.

In steam generators such as used for nuclear power plants, bundles of vertical U-shaped heat exchanger tubes are welded into a thick tubesheet located at the lower end of the heat exchanger. During operation of such steam generators over an extended period of time, such as 10 years or more, a corrosive sludge material forms and accumulates on the inner upper surface of the tubesheet. This accumulated sludge material causes corrosion of the tubes to an extent of potential or actual tube failure. To correct this serious problem without undesired replacement of the heat exchanger, it is necessary to remove the old deteriorated tube end portions from the tubesheet and replace them with new tube portions which are remotely positioned and pressure-tightly welded into place without removing and dismantling the entire heat exchanger assembly. However, because of the remote and relatively inaccessible location of the tubes and the radioactive environment which is usually involved, such tube replacement is very difficult to accomplish reliably and safely. Thus, a suitable solution to this tube replacement problem has been needed, particularly for heat exchangers used in the nuclear power industry.

Some portable equipment and procedures have been previously developed by industry for rotary trimming the end of tubes. For example, U.S. Patent No.3,898,714 discloses a pipe alignment clamp externally fitted around adjacent pipes to hold them in coaxial alignment prior to welding. U.S. Patent Nos.4,000,556; 4,161,810; and 4,393,564 disclose methods and apparatus for hydraulically extracting heat exchanger tubes from tubesheets. Also, U.S. Patent No. 3,962,767 shows repair of heat exchanger tubes by severing the tube, inserting a sleeve and internally welding the sleeve in place. U.S. Patent No. 3,979,810 shows attachment of a tube into a plate opening by welding the tube end and also by hydraulic deforming and roll swaging the tube wall against the plate opening.

The prior art has apparently not suggested methods suitable for remotely removing and replacing deteriorated tube ends in heat exchangers, particularly those in relatively inaccessible location and in radioactive environments where such tube end replacement is very difficult to accomplish reliably and safely. The present invention addresses this problem.

According to the invention, a method for removing and replacing a tube end portion attached to a tubesheet of a heat exchanger comprises the following steps:

(a) inserting a rotary cutting tool into a tube end portion and circumferentially severing the tube wall at a selected location near the tubesheet;

(b) removing a weld joint located between the tube end portion and the tubesheet;

(c) withdrawing the tube end portion out through the surrounding opening in the tubesheet;

(d) inserting a new replacement tube into the tubesheet opening and axially positioning the new tube in axial alignment and interfitting engagement with the existing tube end;

(e) expanding the outer end of the new tube firmly into the surrounding tubesheet opening, so as to hold the new tube in position;

(f) expanding the inner end of the replacement tube into the existing tube end;

(g) welding the new tube inner end to the existing tube end to provide a pressure-tight joint therebetween; and

(h) welding the new tube outer end to the tubesheet to provide a pressure-tight joint therebetween.

In a preferred method of the invention, the first step is cleaning by honing the inside of the tube in the area where it is to be cut, i.e. above the tubesheet and adjacent sludge pile and below the first support baffle of the heat exchanger. Next, a rotary cutting tool is used to remove the weld joint between the existing tube end and tubesheet, followed by the insertion of a long rotary cutting tool into the tube and severing the tube in the previously honed area. Then the deteriorated existing tube end portion is withdrawn out through the tube sheet opening, using convention tube removal equipment.

After removal of the deteriorated tube end(s), a special rotary cutting or machining tool is inserted through the tubesheet opening and into the exposed end of the existing tube. The tube end is remotely machined on its surface and the tube end is chamfered at a 40-50° angle with the tube centerline in preparation for welding it to a new replacement tube. Next a new replacement tube, having the same outside diameter and length as the original deteriorated tube, and having its forward end swaged inwardly, is remotely inserted through the tubesheet opening and positioned in axial alignment and interfitting engagement with the exiting tube end by using a special remotely operated tube alignment and positioning tool. After inserting the replacement tube inner end into the exposed end of the existing tube, the outer or

2

lower end of the replacement tube is expanded firmly into the tubesheet opening by suitably pressurizing and expanding a rear portion of the tube alignment tool, after which the tube positioning tool is withdrawn from the heat exchanger.

To ensure proper welding of the replacement tube to the existing tube end, a tube expansion tool is next inserted into the replacement tube and its inner end is remotely expanded into the existing tube to assure firm contact therebetween; then the tube expansion tool is withdrawn.

Next, the new tube expanded inner end is remotely welded to the existing tube, and the new tube outer end is welded to the tubesheet to provide pressure-tight joints therebetween. After performing such welding steps, the resulting weld joints can be heat treated if necessary or desired, then the joints pressure tested to verify the strength and tightness of the weld joints. Also, non-destructive tests can be performed on the weld joints to verify proper quality of the welds.

Preferred tube replacement methods of the invention use three special remotely operated tools. The first is a rotary cutting tool device adapted for remotely machining the exposed end of the existing tube through an opening in the tube sheet. The second is a tube positioning tool adapted for positioning a replacement tube in interfitting relationship with the existing tube end. The third is an expansion tool adapted for expanding the replacement tube firmly into engagement with the existing tube end, so as to assure good contact required for subsequent welding the tubes together and to the tubesheet.

It is an advantage of the present invention that the ends of deteriorated tubes in heat exchangers can be remotely removed and replaced reliably and safely without requiring disassembly of the heat exchanger, thus providing a substantial saving in plant outage time and maintenance costs for the heat exchanger installation.

Embodiments of the invention will now be described in the following description and examples. In the description, reference will be made to the accompanying drawings wherein:

Fig. 1 is a diagram generally showing the principal method steps used for the remote removal and replacement of heat exchanger tube ends in accordance with the present invention;

Fig. 2 is a partial cross-sectional view of a portion of a heat exchanger showing a tube and tubesheet configuration and two typical tube end portions to be remotely removed and replaced in accordance with the invention;

Fig. 3 shows a partial cross-sectional view of a portion of the heat exchanger configuration showing the defective tube ends removed, and showing the tube end preparation prior to installing a replacement tube; and

Fig. 4 shows a partial cross-sectional view of a portion of the heat exchanger showing the replacement tubes remotely installed in the tube ends and tube sheet and welded in place in accordance with the invention.

Fig. 5 shows a longitudinal cross-sectional view of the rotary cutting tool front end inserted into a tube, with the pivotable cutting blades fully extended to contact the outer surface of the tube, and the groove edges of the tool body contacting the tube end;

Fig. 6 is a cross-sectional view of the tool body taken at section 6-6 of Fig. 5 and showing the pivotal attachment of the cutting blades each in a groove in the tool body;

Fig. 7 is a partial longitudinal view of the rotary cutting tool body showing one side of a groove relieved so as to provide a cutting edge for machining the tube end;

Fig. 8 shows a partial longitudinal cross-sectional view of the tool front end portion with a pivotable cutting blade partially extended to contact the tube edge prior to being pushed forward onto the outside surface of the tube.

Fig. 9 shows a longitudinal cross-sectional view of the tube positioning tool inserted into a replacement tube and existing tube end according to the present invention;

Fig. 10 is a partial longitudinal cross-sectional view of the tool after its parts have been actuated by fluid pressures;

Fig.11 shows a cross-sectional view of the tube expander tool assembly according to the present invention, the tool being positioned within a replacement tube to be expanded;

Fig.12 shows a cross-sectional view of the forward portion of the tube expansion tool according to the present invention, the tool mandrel being shown in a forward position after it has been actuated to expand a collet and replacement tube end; and

Fig.13 shows a cross-sectional view of the tube expander tool shown after the tool collet has been pulled free of the ex-panded replacement tube end.

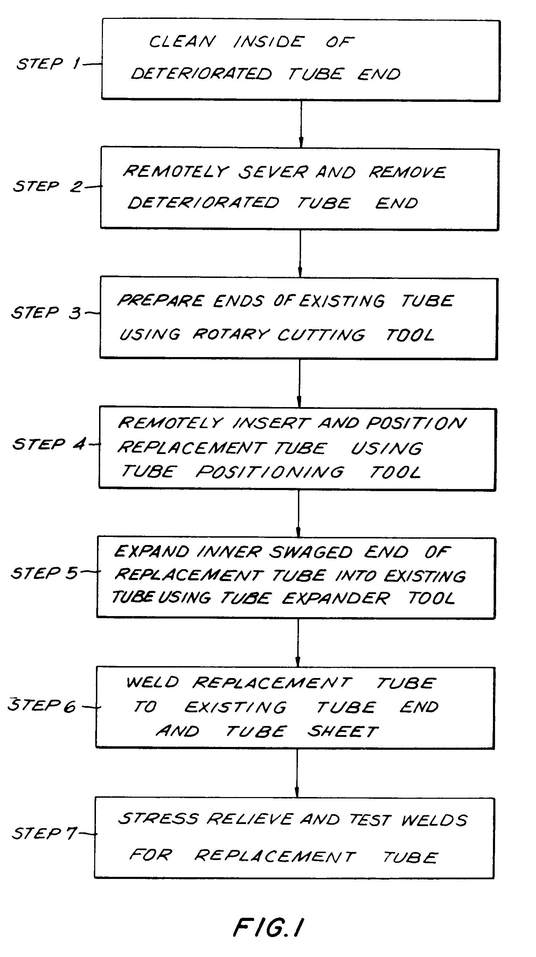

In accordance with a preferred embodiment of the present invention, the deteriorated end portions of heat exchanger tubes, such as located adjacent a lower tubesheet in a remotely located heat exchanger for a nuclear power plant steam generator, are remotely removed and replaced with new tubes having

EP 0 234 920 B1

substantially the same diameter and length using the method of the invention. The principal successive method steps are generally shown by the Fig. 1 flow diagram, which briefly outlines the principal steps 1-7 used for tube replacement. These steps 1-7 are described in greater detail hereinbelow.

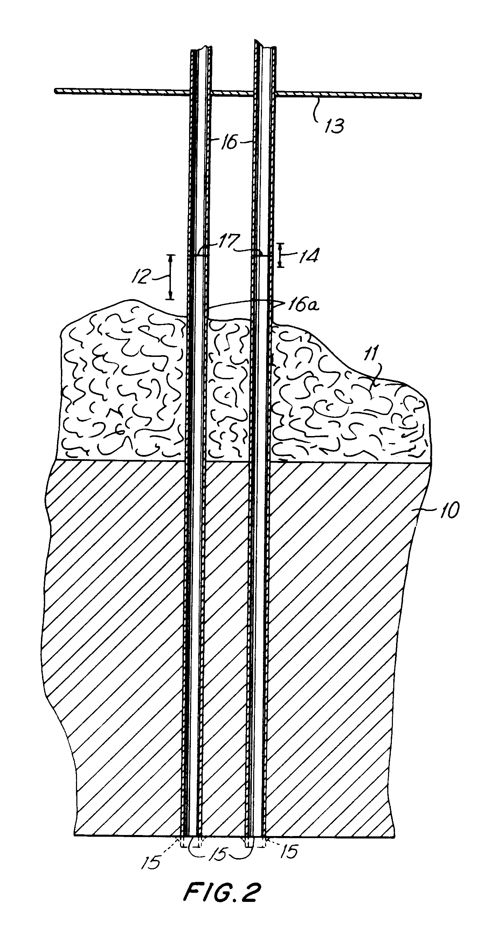

Referring now to the Fig. 2 drawing showing a portion of two tubes of a typical heat exchanger tube installation, the lengths of deteriorated tube ends to be remotely removed from the heat exchanger is determined by the combined thickness of the tubesheet 10 and sludge pile 11, plus a small additional length 12 of tube above the sludge pile and below the first support baffle of plate 13 of the heat exchanger. The first method step in the tube end remote removal and replacement method is locally cleaning the tube inner surface by inserting a conventional rotary honing tool (not shown) into the tube 16 and honing the tube inside surface in the area 14 where it is to be cut. Such honing removes any scale existing in the tube and provides a smooth inner surface for receiving a replacement tube end.

As a second step, the tube-to-tubesheet weld at 15 is cut off flush with the lower surface of tubesheet 10, as shown at 15a. Next, a conventional rotary cutting tool (not shown) is remotely inserted successively into each tube 16 and the tube is severed at 17 within the hones area 14, as shown by Fig. 2. After severing the deteriorated tube end portion 16a at 17, it is withdrawn from the opening in the tubesheet 10 using conventional tube pulling equipment (not shown).

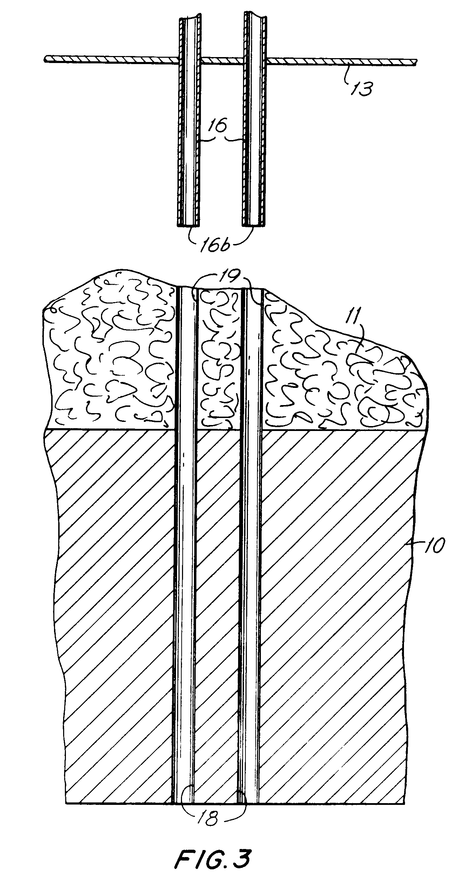

After removal of the old tube end portion 16a from the tubesheet 10, the hole 18 in the tubesheet and a hole 19 remaining through the sludge pile 11 are cleaned as needed such as by suitable rotary equipment, as generally shown by Fig. 3. Then as a third step, the existing tube end(s) 16b is prepared suitable for receiving a replacement tube. A special rotary cutting tool device having multiple pivotable cutters located at its forward end is inserted through the tubesheet hole 18 into the tube end 16b, and the cutting tool is rotated so as to effectively scrape the tube outside surface and also machine the tube end 16b to an angle of 40-50° with its centerline. Such machining step prepares the tube end 16b suitable for subsequent welding it to a replacement tube. The rotary cutting tool and method for its use is described as follows:

Rotary Cutting Tool and Method for Use

The rotary cutting tool device according to the present invention comprises an elongated main body having a central portion, a reduced diameter front end portion, and a reduced diameter threaded rear end portion, the main body having at least one longitudinal groove formed therein. A cutting blade is provided in each longitudinal groove and pivotably attached at its rear end to the tool main body. Preferably, three longitudinal grooves are provided circumferentially equally-spaced apart in the tool body, with a cutting blade being pivotably attached in each longitudinal groove. The cutting blades are each outwardly pivoted near their rear ends and pivotably attached to the tool central body portion, and each blade has cutting surfaces provided on at least its inner surface suitably shaped for remotely machining both the end and outside surfaces of a tube into which the tool is inserted. A first spring means is provided in each groove between each cutting blade and the tool body to bias the blade outwardly. Also, the tool body central portion has a cutting surface provided by one side of each longitudinal groove at the shoulder between the body central and front end portions.

A cylindrical collar is provided around the body reduced diameter rear portion in sliding contact with the rear end of each pivotable cutting blade. An annular-shaped second spring means is provided between the cylindrical collar and a thrust washer, and an elongated shaft is attached onto the threaded rear end portion of the tool body. An actuating means is provided attached to the main body rear end for axially sliding forward the cylindrical collar for pressing against and retracting the pivotable cutter blades. A suitable rotary means is used for rotating the cutting tool device within the tube being machined. The collar axial actuating means is preferably a fluid operated piston assembly attached to the rear end of the elongated shaft, the piston being arranged to force an actuator sleeve and the cylindrical collar forward and to pivot the cutting blades inwardly against the force of the first spring means. The actuator piston is retracted by a third spring means provided in axial engagement with the piston assembly.

This invention also provides a method for using the rotary cutting tool device for remotely machining the end portion of a tube, such as for welding preparation for welding to a mating replacement tube. In the method, the tool having its pivotable cutting blades each retracted into their longitudinal grooves is remotely and partially inserted into the end of a tube to be machined, each cutting blade being held in a retracted position within its groove in the tool body by fluid pressure provided on the actuator piston. The tool body portion is inserted through a hole or opening in a tubesheet, and when the tool is clear of the tubesheet and any other obstructions such as a sludge pile, the fluid pressure on the actuator piston is released and the cutting blades are automatically deployed to an intermediate position by action of the first spring means, which are usually small helical coil springs. The tool is now pushed forward into engagement with the

4

EP 0 234 920 B1

existing tube end. The tapered front end portion of the tool body guides the tool into the tube end, and as the tool body portion enters the tube the cutting blades ride up and onto the tube outer diameter, thereby compressing a spring washer second spring means of the tool as they do so. The tool is pushed forward until tube end cutters formed in the tool body grooves butt up against the tube end. A fourth spring which is not shown maintains tool body pressure against the tube end. Then by rotating the cutting tool body with blades deployed, the cutting surfaces of the pivotable blades and tool body groove cutters scrape the tube outer surfaces and also trim the tube end to the desired shape, such as 40-50° angle bevel suitable for a mating replacement tube to be reliably welded onto the existing tube end.

Following such remote machining of the tube end, the cutting tool is withdrawn from the tube, the piston is actuated by applying fluid pressure thereby retracting the cutting blades into the body grooves, after which the entire tool assembly is removed through the hole in the tube sheet.

It is an advantage of the present invention that the rotary cutting tool has a forward guiding portion which can be remotely inserted into a tube and is provided with multiple pivotable cutting blades which are remotely adjustable radially outwardly so that they can contact the outer surfaces of an existing tube end. Then, by rotating the cutting tool body it remotely trims in a single operation the existing tube end surfaces to a desired shape, such as needed for subsequent welding to a mating replacement tube. Such remote machining operations are made feasible by this invention.

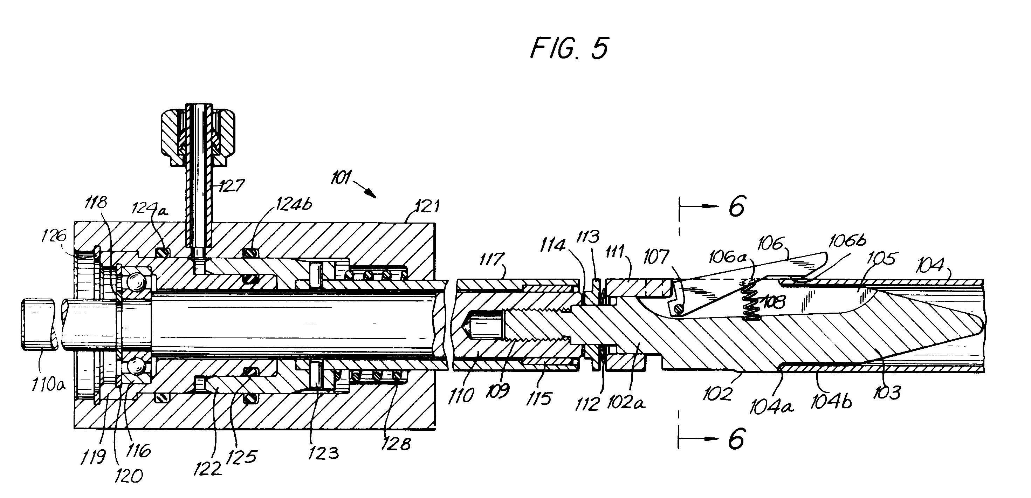

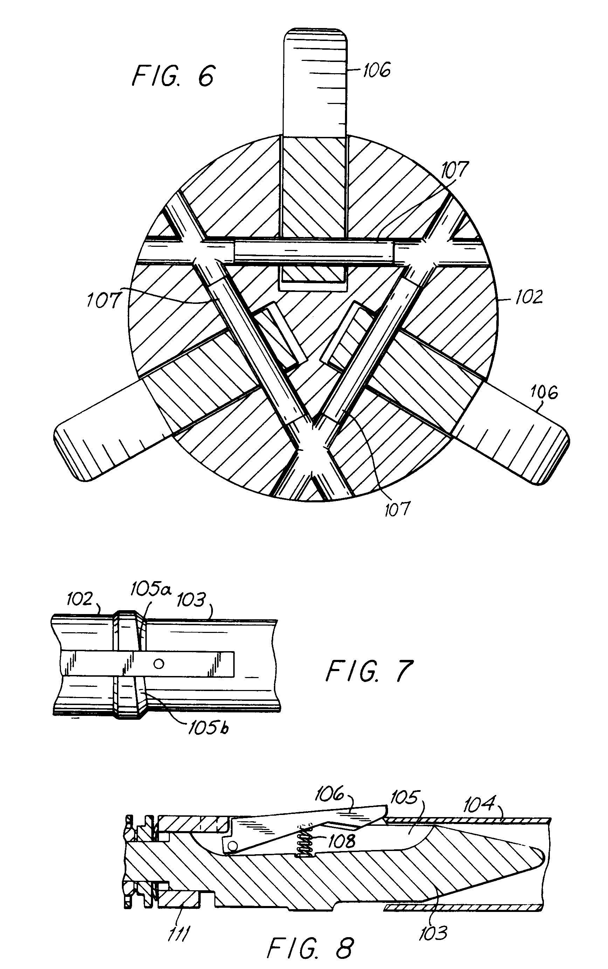

A preferred embodiment of the remotely operated cutting tool device according to the present invention is illustrated by Fig.5 which shows tool assembly 101 comprising a main body 102 which includes a forward guide portion 103 having a reduced diameter, which portion can be inserted into the open end of an existing tube 104. The tool body 102 is provided with at least one longitudinal groove 105 located in the central portion of body 102. Each groove 105 contains a pivotable cutting blade 106, which is pivotably mounted to the rear portion of the tool body 102 by a pin 107, as is also shown more clearly by the Fig. 6 sectional drawing. A spring 108 is provided between the inner surface 106a of blade 106 and the bottom of groove 105 in the main body 102 of the tool, so that the pivotable blade 106 is forced outwardly by the spring 108, which is preferably a helical type compression spring. Preferably, three equally-spaced grooves 105 and pivotable blades 106 are provided in the tool body 102, as best shown by Fig. 6 each blade having an inner cutting surface 106b.

Fig. 7 shows the tool body portion 102 adjacent front portion 103 being relieved on one side 105a of each groove 105, thereby providing a sharp angle cutting surface 105b in body 102 on the opposite side of groove 105.

The rear portion 102a of the tool body 102 has a reduced diameter and is threaded at 109 into an elongated shaft 110. The pivotable blades 106 are also each biased inwardly against spring 108 by an axially movable cylindrical collar 111, which is slidable on the rear portion 102a of the tool body 102. The collar 111 is biased by at least one annular-shaped bevel or disc spring 112. The axial force provided by spring(s) 112 is determined by the axial location of thrust washer 113, which is controlled by selectively fitting shims 114 between shaft 110 and the thrust washer 113. The shims 114 also determine the position of the partially deployed cutting blades 106, as also shown in Fig. 8.

During use of the rotary cutting tool, as the forward end of tool 101 is pushed into engagement with the exposed end 104a of tube 104, the cutting blades 106 are forced radially outward, thereby compressing disc spring 112 which provides the force on cutting blade edges 106b necessary for machining the tube outside surface 104b, as shown by Fig 8. A spring (not shown) pushes the entire tool forward, thereby providing the force necessary for machining tube end 104a. Machining of the tube end 104a and outside surface 104b is accomplished by rotating shaft 110 with a suitable motor driver means (not shown) attached to the shaft at end 110a. Shaft 110 is located by and rotates within front sleeve bearing 115 and rear ball bearing 116. Sleeve bearing 115 is press fitted into the front end of the actuator push rod sleeve 117. Ball bearing 116 is held to shaft 110 by a retaining ring 118 and into end cap 119 with retaining ring 120.

The rear end of the tool 101 contains an actuating mechanism for controlling the position of the cutting blades 106. The mechanism consists of an actuator housing 121 having end cap 119 and annular-shaped piston 122 located therein. PIston 122 is permanently attached to actuator push rod 117 by spiral pins 123. Also, "O" ring seals 124a and 124b provide outer pressure seals between the housing 121 and both the end cap 119 and the piston 122, respectively. The inner seal between the piston 122 and end cap 119 is provided by "O" ring 125. The end cap 119 is held in the actuator housing 121 by retaining ring 126.

Retraction of the cutting blades 106 as necessary for insertion of the tool 101 through the tube sheet hole is accomplished by introducing fluid pressure at port 127. This pressure will force piston 122 and actuator push rod 117 forward against compression spring 128 until rod 117 contacts thrust washer 113, which in turn will push disc spring 112 against cylindrical collar 111 and push the collar 111 against cutting blade 106, thereby forcing cutting blade 106 to pivot inwardly into the slots 105 in tool body 102. Once the

5

EP 0 234 920 B1

forward end 103 of the tool 101 passes through the tube sheet opening, the fluid pressure at port 127 is released and compression spring 128 returns piston 122 to its original position, thereby leaving the cutting blades 106 in the partially deployed position shown in Fig. 14. The tool 101 is now pushed forward until its forward guide portion 103 enters the tube end 104, and then the body cutter face 105a bottoms on tube end 104a. Shaft end 110a is now motor driven to rotate the tool body and blades so as to machine both the outside surface 104b and tube end 104a of existing tube 104.

When the tube machining step is completed, the tool 101 is withdrawn from tube 104, port 127 is pressurized to retract the pivotable cutting blades 106 into grooves 105 against springs 108, and the tool 101 is withdrawn through the tubesheet hole. A replacement tube (not shown) can then be inserted through the opening in the tubesheet and fitted in place for reliable welding onto end 104a of the existing tube 104.

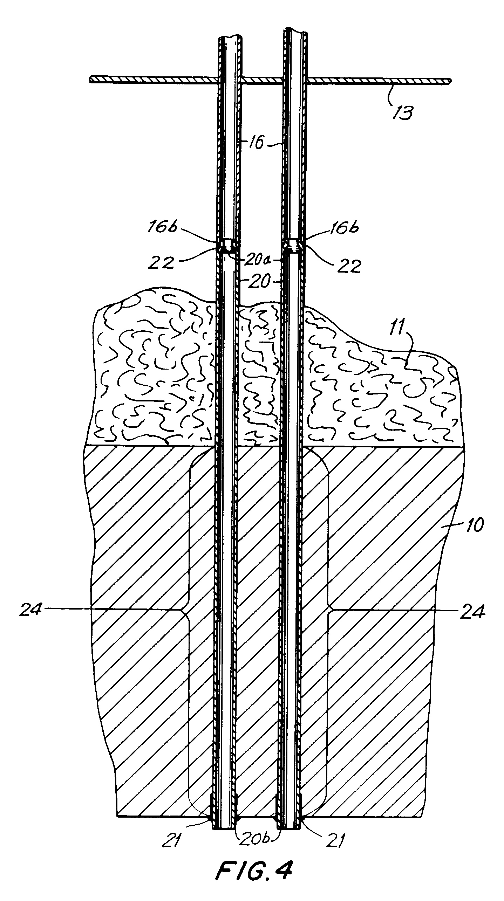

Following preparation of the tube end(s) 16b, as a fourth step a new replacement tube 20 having the same diameter and length as the removed tube end portion 16a and having its forward end 20a swaged inwardly, is remotely inserted in through the tubesheet opening 18 and is positioned in axial alignment and interfitting engagement with tube end 16b, as is generally shown by Fig. 4. The tube 20 is inserted and positioned in axial alignment and interfitting engagement with tube end 16b using a special tube positioning tool. This tube positioning tool and method for its is described hereinbelow.

Tube Positioning Tool and Method for Use

The tube positioning tool comprises a main body part having a cylindrical bore therein and dual pressure connections to said bore, and having a centrally located divider fixed in the bore between the dual pressure connections. A rear piston means having a pressure connection is provided slidable partially within the rear portion of the bore in the main body part, the piston having an elongated inner tube unit extending forwardly through the piston and main body part and being attached at the tube opposite end to a tapered nosepiece. A clamp body slidably fits over the elongated inner tube unit, and is rigidly attached at its forward end to an expansion collet having multiple resiliently supported jaws. An annular-shaped piston is provided attached to the inner tube unit and slidable within the clamp body, so that by pressurizing the piston the tube unit is moved rearwardly so that the collet resilient jaws are moved radially outwardly by axial rearward movement of the tapered nosepiece member relative to the collet jaws. Thus, the nosepiece can be drawn rearward into the collet clamp by the application of fluid pressure to the inner tube annular piston actuator associated with the tool front portion. The fluid pressure is supplied to the annular piston through the inner tube, which in turn is pressurized through a port connected to the rear piston.

Pressure applied to the main body rear port between the rear piston and the divider will force the main body to move forward relative to the rear piston, which action also moves the replacement tube forward into an axial interfitting relationship with the existing tube. Located at the front portion of the main body is a front piston connected to a collar and enclosing an expandable mandrel all slidable relative to the inner tube unit, and adapted for contacting the inner wall of the replacement tube and expanding it radially into a tube sheet.

In the operation or use of the tube positioning tool, the tool forward end is first inserted through a replacement tube and into an adjacent end of an existing tube. Then the tool clamp actuator piston is pressurized through the pressure connection in the rear piston. Fluid pressure is provided from an external source, and the clamp actuator piston is moved axially rearwardly to draw the tapered nosepiece into the collet and expand the collet, and thereby anchor the tool forward end firmly into the existing tube. Next, the main body rear pressure connection is pressurized thereby forcing the main body and the accompanying replacement tube axially forward into an interfitting engagement with the adjacent existing tube end. Then, the main body forward pressure connection is pressurized to expand the resilient mandrel against the replacement tube inner wall and to expand the tube into a tube sheet. After the tube positioning tool is thereby pressure actuated, the fluid pressure at all three ports is released. The tube positioning tool is then withdrawn from the tube and the tube sheet.

The tube positioning tool in accordance with the present invention is particularly useful for the remote replacement of deteriorated tube end portions adjacent a tube sheet in heat exchangers of steam generators in nuclear power plants, by remotely positioning a replacement tube in interfitting relationship with an existing tube and ready for subsequent welding the tubes together. The tool enables such tube end portions to be advantageously replaced safely and reliably with minimal modification to the exchanger and substantially reduced outage time for the plant.

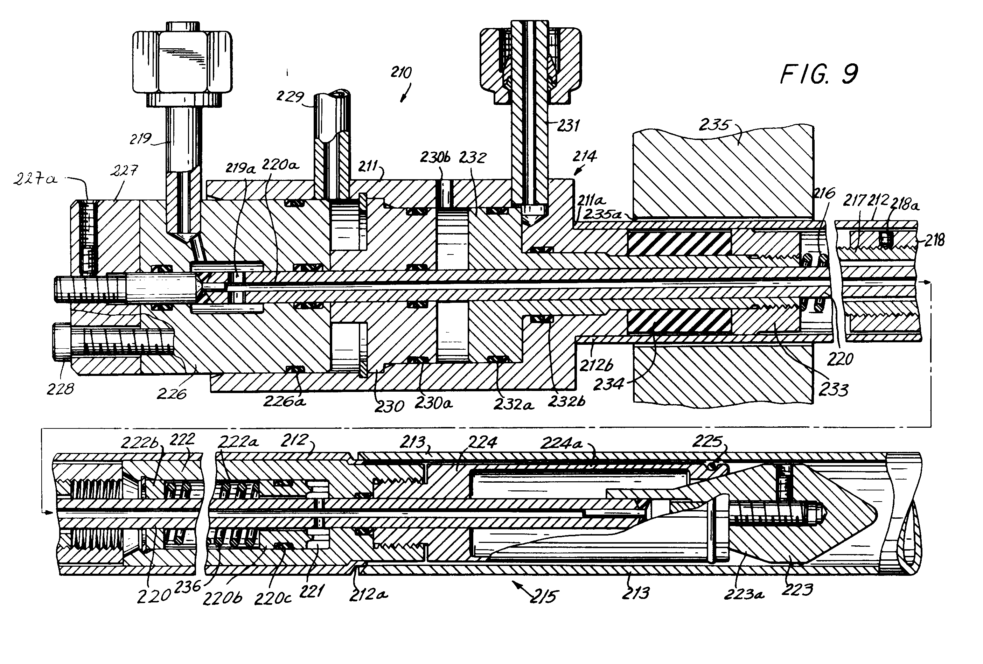

The tube positioning tool device of the present invention will now be described according to a preferred embodiment with reference first to Fig.9 which shows a longitudinal cross-sectional view of the tube positioning tool 210 after being inserted into position in a replacement tube 212 and an existing tube end

6

213, but with the functional parts of the tool in normal position and not yet pressure actuated. As shown in Fig. 9 the elongated tool 210 includes two principal sections. The tool 210 includes a rear section 214 having three pressure connections and a reduced diameter front section 215, which is inserted through the replacement tube 212 and into existing tube end 213.

The main body part 211 is the principal component of the tool rear section 214, and contains two pistons each slidable within a cylindrical bore and each having a pressurizing port connected to the body and separated by a centrally located divider wall 230 sealably fixed within the bore of the body 211. The tool front section 215 is separated from the rear section 214 by substantially the length of the replacement tube 212. The two sections 214 and 215 are connected together by an inner tube unit 220, and are held in their proper relative positions by a central spring 216 which surrounds inner tube unit 220. Spring 216 acts against a guide tube 217 and an annular shaped adjusting nut 218 which also surround the inner tube unit 220, and are locked to guide tube 217 by a set screw 218a.

The tool front section 215 includes a cylindrical clamp body 222 threadably attached at its forward end to a collet clamp 224, which both surround and are slidable on the inner tube unit 220. The inner tube 220 connects tapered nosepiece 223 to a rear piston 226 having seal ring 226a and slidable in main body 211, and extends through the rear piston 226. Rear pressure port 219 is connected to the rear piston 226, so that fluid pressure from port 219 can be transferred through radial openings 219a to passageway 220a in the tube unit 220. The rear end of the inner tube unit 220 is threaded into a locking plate 227, which is fastened to the rear piston 226 by screws 228. The locking plate 227 has lock screw 227a and permits the final length of the tool 210 to be set to match that of the replacement tube 212. Seal rings are provided around tube unit 220 as needed in rear piston 226, divider 230, and clamp body 222 to confine the pressure from port 219 to passageway 220a.

The collet clamp 224 is fluid pressure actuated through tube unit 220, and is used to temporarily clamp the tool 210 forward end 215 firmly against the inner surface of the existing tube 213. Whenever fluid pressure is applied at the rear pressure port 219 attached to the rear piston 226, the pressure passes through the central passage 220a of inner tube unit 220 to a cavity 221 located between an annular piston 220b and the bore 222a of clamp body 222. Piston 220b having seal ring 220c is attached to tube 220 and are both slidable within the clamp body 222. Pressurizing cavity 221 forces the inner tube actuator piston 220b and attached tube unit 220 rearward against spring 236 anchored to clamp body 222 at ring 222b, and tends to force the clamp body 222 forward. This action causes the tapered surface 223a of nosepiece 223, which is threadably attached to tube unit 220, to be drawn rearwardly into expandable collet clamp 224, thereby spreading multiple collet fingers 224a and forcing them into firm contact within the existing tube 213. Also, an "O" ring 225 is provided surrounding the forward end of collet 224 to advantageously increase the friction between the collet clamp 224 and the existing tube 213.

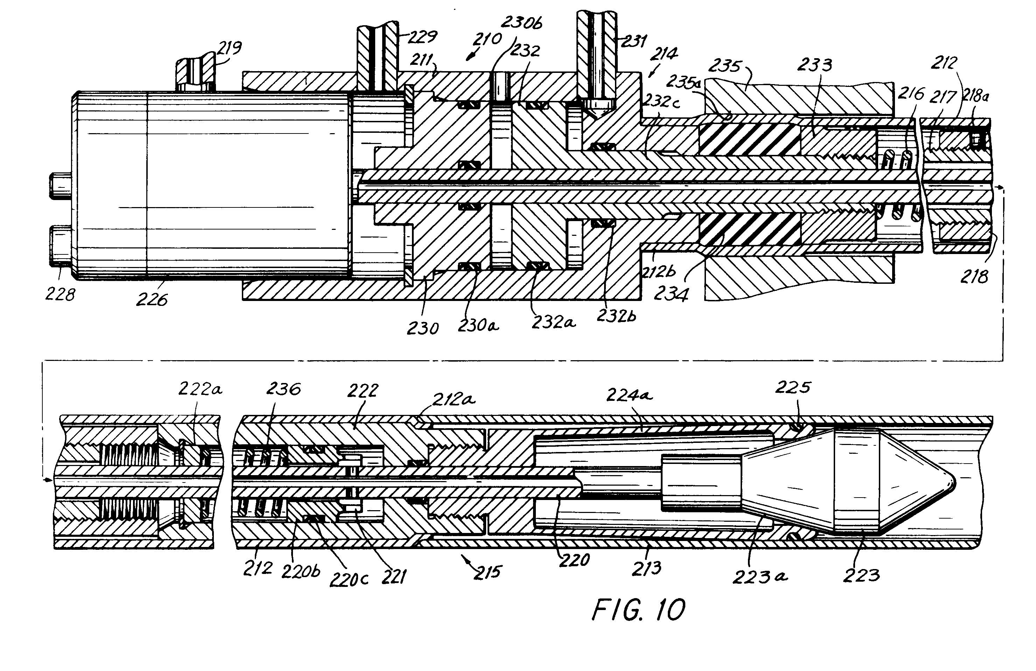

After the tool 210 forward end collet clamp 224 has been clamped firmly into the existing tube 213, the fluid pressure from rear port 219 also forces the forward end of clamp body 222 against the forward formed end 212a of the replacement tube 212, and moves it forward into an interfitting engagement with the existing tube 213, as shown in Fig. 10 . Also, the intermediate port 229 connected to main body 211 is now pressurized. This provides fluid pressure against the divider plate 230 containing seal ring 230a and forces it forward together with the attached main body 211, so that the main body is thereby moved forward against the replacement tube rear end 212b, thereby providing an additional axial force for moving the forward end 212a of replacement tube 212 into axial interfitting engagement with the end of existing tube 213. Any fluid leakable past seal ring 230a is drained from body part 211 as relief opening 230b.

Following the axial engagement of front end 212a of replacement tube 212 into interfitting relationship with tube 213, the main body front pressure port 231 is next pressurized, which forces the expander piston 232 having seal rings 232a and 232b rearward. Any fluid leakage past seal ring 232a is removed at opening 230b. Piston 232 has sleeve portion 232c attached to retainer 233, so that fluid pressurization at port 231 also causes retainer 233 to move rearward towards forward end 211a of body 211 and thereby compress expandable resilient mandrel 234 located between the retainer 233 and main body 211. This compressive action causes the resilient mandrel 234 to expand radially outwardly against the replacement tube 212 inside diameter, and expands the tube into firm engagement with the tube sheet 235, as is shown in Fig. 10. Thus, Fig. 10 shows a longitudinal cross-sectional view of the tube positioning tool 210 after all three pressurized functions of the tool have been actuated.

After the tool has been thus fully actuated to force the replacement tube 212 into interfitting relationship with tube 213 and to expand tube 212 firmly into tube sheet 235, as is shown in Fig. 22, the fluid pressure at each port is then released. By releasing the fluid pressure at the three ports 219, 229 and 231, the movable parts of tool 210 will return to their original positions as shown in Fig. 9 by action of the springs 216 and 236. Spring 236 will cause the inner tube unit 220 and piston 220b to return to their original positions relative to clamp body 222 and disengage collet 224 from tube 213 inner wall. Also, the natural resiliency of the expandable mandrel 234 will move the expander piston 232 forward to its original position in main body 211.

In operation or use of the tube positioning tool 210, a replacement tube 212 is first placed in position on the tool 210 forward end section 215. The tool and tube assembly is then pushed through a hole 235a in a tube sheet 235 until the tool forward end portion 215 is in place within the existing tube 213, as is shown in Fig.9 . Pressurizing rear port 219 causes the tool 210 forward end collet 224 to be clamped into the existing tube 213, and also forces the formed end 212a of the replacement tube 212 into partial axial engagement with the existing tube 213, as is shown in Fig. 10 . Intermediate port 229 is then pressurized, thereby causing an axial force to be exerted by body front surface 211a on the replacement tube 212 relative to the existing tube 213, and moves tube 212 axially forward into interfitting engagement with the tube 213. Then, pressurizing the front port 231 moves piston 232 rearward and causes the rear end of replacement tube 212 to be expanded firmly into the hole 235a in the tube sheet 235, thereby firmly holding tube 212 in place.

The pressure is next released at all ports 219, 229, and 231, and the moving parts of tool 210 return to their original positions. The tool is then withdrawn from the tubes 212 and 213, leaving the replacement tube 212 firmly anchored in place within the tube 213 and the tube sheet 235.

Following positioning of the replacement tube 20 for welding to tube end 16b, as a fifth step the inner swaged end 20a of the replacement tube 20 is remotely expanded firmly into the tube end 16b per Fig. 4, using an elongated tube expander tool. The expander tool is inserted into the tube 20 and pressurized so as to expand the inner swaged end 20a of the replacement tube 20 radially outwardly and firmly into the existing tube end 16b, so as to provide a joint suitable for reliable welding together. This tube expander tool and method for its use is described hereinbelow.

Tube Expander Tool and Method for Use

This invention also provides an elongated tube expander tool assembly and method for its use for remotely expanding a replacement tube end portion into an existing tube in relatively inaccessible locations to provide a close radial fit between the mating tubes. The tube expander tool according to the invention comprises an elongated central shaft which has a cylinder attached to its forward end, and attached to the cylinder is a collet having multiple fingers which are radially movable at their forward ends. The tool cylinder contains an axially movable front piston having attached to its forward end a cylindrical shaped tapered mandrel. The tool central shaft contains a central elongated tube having a pressure connection for pressurizing the rear end of the piston to axially drive the mandrel forward to expand the collet fingers. The central shaft has attached at its rear end an annular retractor piston slidable within a retractor housing which when pressurized can release the tool fingers from an expanded replacement tube end.

During use of the elongated tube expander tool, the front portion is inserted into a remotely located replacement tube until the forward fingers end of the collet is located within the tube reduced diameter portion to be expanded. Then, the rear end of the front piston is pressurized by a hydraulic fluid supplied through the central tube and the front piston and mandrel are forced forward in the collet, so as to expand radially outwardly the collet multiple fingers and thereby expand the tube end firmly into an existing mating tube to provide a close fit therebetween. After such tube end expansion, the collet is pulled free of the expanded tube end by pressurizing the annular retractor piston at the rear end of the tool. The expander tool is then withdrawn from the tube.

The present invention advantageously provides an expander tool assembly and method so that a replacement tube end can be remotely expanded conveniently and reliably into an existing tube to permit making reliable welds therebetween, such as for remote replacement of tube ends in heat exchangers for nuclear power plants.

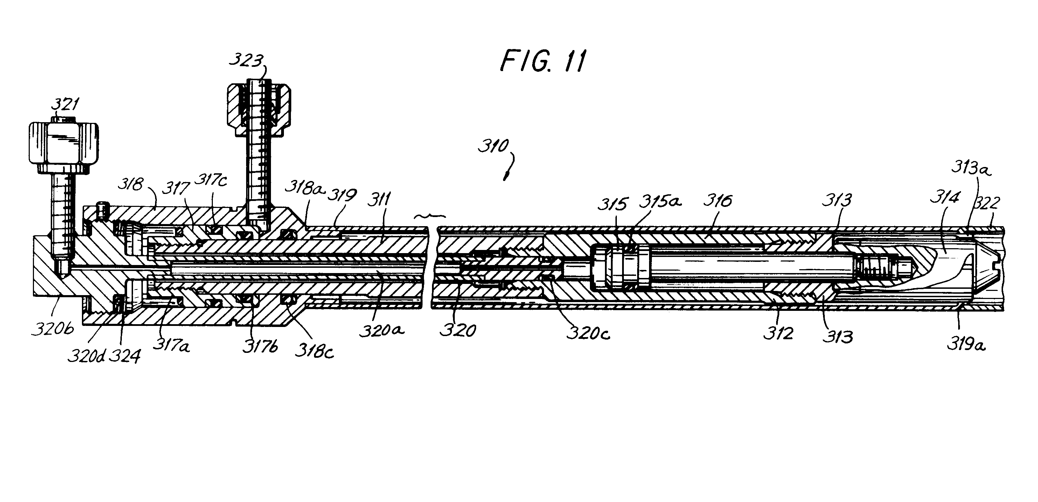

The tube expander tool will now be described in more detail first with reference to Fig. 11 . As generally shown by Fig. 11 , the expander tool assembly 310 has an elongated central shaft portion 311 and an expandable forward end portion 312 rigidly attached to the shaft 311. The forward portion 312 includes a collet 313 rigidly attached to a cylinder 316 and having multiple fingers 313a, and a mandrel 314 which is concentrically located and axially movable within the collet 313 by a piston 315 rigidly attached to the mandrel 314 and slidable in the cylinder 316. The mandrel 314 is tapered so that its diameter at its rear end is slightly larger than its front end diameter, preferably by 0.015-0.040 inch on diameter.

The central shaft 311 is attached at its rear end by suitable thread means to an annular retractor piston 317, which slidably operates within a retractor housing 318. The mating threads 317a connecting the retractor piston 317 onto central shaft 311 provide a means for lengthwise adjustment of the expander tool 310, so that when a replacement tube 319 is bottomed on the retractor housing shoulder 318a, the forward end of the collet multiple fingers 313a are properly located under the replacement tube swaged weld joint end 319a, which is swaged radially inwardly so as to fit within existing mating tube 322. Inner annular seal ring 317b and outer seal ring 317c are provided on piston 317 to seal it against shaft 311 and cylinder 318, respectively. Seal ring 318c is provided between the housing 318 and shaft 311.

Fluid pressure is applied to the front piston 315 having seal ring 315a through a passage 320a in central tube sub-assembly 320, while at its forward end, the seal 320c is inserted into the adjacent end of cylinder 316, and at the tube rear end is attached to retractor housing and fitting 320b. This rear fitting 320b is threaded into the rear end of housing 318 and includes rear port 321 connected to provide pressure to the passageway 320a in central tube 320. Fluid pressure is applied to retractor piston 317 at front port 323 attached to the housing 318, which pressure will move the retractor piston 317 rearward as needed to pull the collet fingers 313a free and release them fron an expanded joint end 319a of tube 319. The required reactive force is applied to the replacement tube 319 at its rear end by housing shoulder 318a.

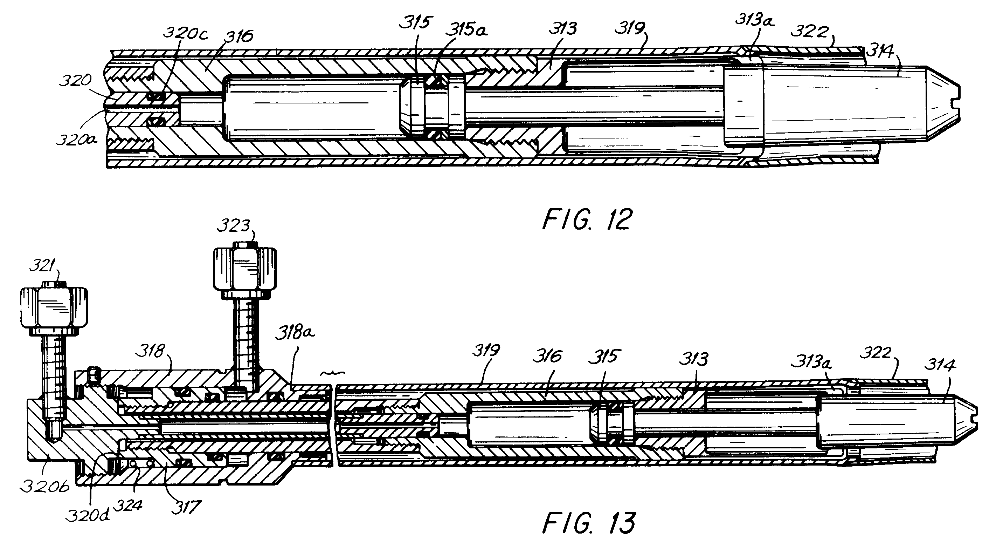

When using the expander tool assembly 310 for expanding tube end 319a, the forward end portion 312 is inserted into the replacement tube 319, which is already in place with end 319a inserted into tube 322 of a heat exchanger. Shoulder 318a of the tool retractor housing 318 is bottom on the tube 319 rear end. Fluid pressure is then applied through rear port 321 and central tube sub-assembly 320 against the piston 315, so that piston 315 drives the tapered mandrel 314 forward within collet 313. This movement of mandrel 314 expands the collet fingers 313a against the replacement tube end 319a and forces tube end 319a into firm engagement with the existing mating tube end 322. This configuration of the forward end portion of the tube expander tool 310 and the resulting expanded weldable joint 319a are shown in Fig. 12.

Following expansion of the replacement tube end 319a into tube 322, the tool 310 is released from its firm engagement with tube 319 by pressurizing at front port 323, as is shown in Fig. 33. Fluid pressure is applied at front port 323 against the retractor piston 317 and moves piston 317 rearward against compression spring 324 and pulls the collet fingers 313a free from the expanded joint end 319a of tube 319. The required reactive force is applied to the replacement tubes 319 and its rear end by retractor housing shoulder 318a. This pressurization moves piston 317 rearward and releases the collet fingers 313a from their engagement with the replacement tube end 319a. The rearward motion is limited by movement of the retractor piston 317, which bottoms on the central tube assembly nut shoulder 320d.

Fig. 13 shows the tube expander tool 310 similar to Fig. 31 except with the piston 317, cylinder 316 and collet 313 in their retracted position, in which position the tool 310 can be readily removed from the expanded tube 319. Front piston 315 and mandrel 314 are shown remaining in a forward position.

When fluid pressure is removed from front port 323, spring 324 will return the retractor piston 317 to its original forward position as shown in Fig. 11 . Also, after pressure is removed from rear port 321, the front piston 315 can be reset to its oridinal rearward position by manually pushing the mandrel 314 back to its rearward position relative to collet 313, as is shown in Fig. 11.

After the replacement tube 20 is correctly positioned and expanded in the heat exchanger, as a sixth step the tube inner end 20a is remotely welded to tube end 16b and if desired tube rear end 20b can be welded to the tubesheet 10, as generally shown in Fig. 4, using an internal bore welding torch (not shown).

Following such welding, as method step 7 the replacement tube end to tube weld joint 22 is remotely stress relieved using conventional procedures. Also, a non-destructive examination of the replacement tube end to tube weld can be preferably performed. This examination may be by ultrasonic or eddy current examination or a combination of each using conventional procedures. The replacement tube end 20b is welded to the tubesheet face at 21 per Fig. 4, using conventional procedures. The replacement tube 20 is expanded firmly into the tube sheet at 24 for the entire thickness of the tubesheet per Fig. 4, usually by using explosive expansion procedures. Then both upper and lower welds are pressure tested to assure leak tightness of the joints, and thus complete the tube removal and replacement method steps.

This invention will be further described by reference to the following examples of the method steps and tools used for the remote removal and replacement of tubes, which examples should not be construed as limiting the scope of the invention.

EXAMPLE 1

In a vertically-oriented U-bend type heat exchanger used in the steam generator of a nuclear power plant, existing deteriorated tube end portions approximately 36 inches long are first internally honed and then remotely severed above the tube sheet, and the tubes removed. The exposed ends of the remaining tubes are then remotely machined for weld preparation by successively inserting a rotary cutting tool into the tubes, expanding the tool pivotable cutter blades and externally scraping the tubes and also machining the tube ends to a 45 degrees angle with the tube centerline for internally welding them each to a replacement tube.

Next, a new replacement tube having its forward end swaged inwardly is placed on the forward end of a tube positioning tool, and the positioning tool end and accompanying replacement tube are passed through the tube sheet opening and is aligned with and inserted into the existing tube end. The positioning tool forward end is anchored in the existing tube end by hydraulically pressurizing the tool, after which the tool is further pressurized and the new replacement tube forced axially forward into interfitting engagement with the existing tube end. Then, the lower or rear end of the replacement tube is expanded firmly against the opening in the tube sheet after which the tube positioning tool is withdrawn from the heat exchanger.

Next, a tube expansion tool is inserted into the replacement tube and the forward end of the replacement tube is expanded outwardly against the inner surface of the existing tube end to provide a tight fitting contact therebetween for reliable welding, after which the expansion tool is withdrawn. Following such expansion of the tube joint between the replacement tube and existing tube end, the replacement tube end is remotely welded into the existing tube end and to the tubesheet.

Characteristics of typical heat exchanger tubes which have been replaced using the present invention are as follows:

```
Tube outer diameter,  2.22 cms  (0.875 in)

Tube wall thickness,  0.127 cm  (0.050 in)

Tube sheet thickness, 53.3 cms  (21 ins)

Length of replacement tube, 91.4 cms (36 ins)
```

## EXAMPLE 2

In a heat exchanger for a nuclear steam power plant, deteriorated tube end portions are first removed from adjacent the lower tube sheet by using a special remotely operated cutting device (not shown). Then the exposed end portions of the heat exchanger tubes are remotely machined by using the rotary cutting tool in accordance with the present invention. The cutting tool has three equally-spaced pivoted cutting blades, which are first retracted by pressurizing the piston assembly, and the tool forward end is passed through an opening in the tube sheet. After being passed through the tube sheet opening, the blades are pivoted radially outwardly by depressurizing the piston assembly. The forward end of the cutting tool is inserted into the existing tube end, so that the cutting blades contact the end and outside surface of the tube. The cutting tool body is then rotated and the end of the tube is trimmed by the cutting blades and machined by the groove cutting edges at an angle of about 45° to the tube axis, suitable for welding a replacement tube to the existing tube. The cutting tool is then withdrawn from the tube, the cutting blades retracted by pressurizing the piston, and the tool removed from the heat exchanger.

Typical significant dimensions for the rotary cutting tool device and the tube being remotely machined are as follows:

```
Tool body diameter,

        Front portion      1.912 cms (0.753 in)

        Central portion    2.235 cms (0.880 in)

Groove width,             0.403 cm  (0.159 in)

Blade width,              0.396 cm  (0.156 in)

Tube outside diameter, 2.223 cms (0.875 in)

Tube inside diameter,  1.968 cms (0.775 in)
```

EXAMPLE 3

A typical elongated tube expander tool having characteristics as summarized in the table below was constructed and use in remotely expanding a replacement tube end in a heat exchanger.

```
Tool length,              91.44 cms (36 ins)

Tool cylinder outside diameter,  1.93 cms (0.760 in)

Tube inner diameter,      1.968 cms (0.775 in)

Mandrel rear end

    diameter increase, 0.051-0.076 cm (0.020-0.030 in)

Hydraulic pressure to      482 bar

    tool piston,                   gauge (7000 psig)

Axial movement of mandrel, 3.175 cms (1.25 ins)

Increase in the tube

    inner diameter,     0.051-0.076 cm (0.020-0.030 in)
```

By use of the tube expander tool of the present invention, the replacement tube end is expanded firmly into the existing tube suitable for subsequently making a reliable pressure-tight seal weld in the tube.

**Claims**

1. A method for remotely removing and replacing a tube end portion attached to a tubesheet (10) of a heat exchanger, comprising:
   (a) inserting a rotary cutting tool (101) into a tube end portion and circumferentially severing the tube wall at a selected location near the tubesheet;
   (b) removing a weld joint (15) located between the tube end portion and the tubesheet (10);
   (c) withdrawing the tube end portion (16a) out through the surrounding opening in the tubesheet (10);
   (d) inserting a new replacement tube (20) into the tubesheet opening and axially positioning the new tube in axial alignment and interfitting engagement with the existing tube end (16b);
   (e) expanding the outer end of the new tube (20) firmly into the surrounding tubesheet opening, so as to hold the new tube in position;
   (f) expanding the inner end of the replacement tube (20) into the existing tube end (16b);
   (g) welding the new tube inner end to the existing tube end to provide a pressure-tight joint therebetween; and
   (h) welding the new tube outer end to the tubesheet to provide a pressure-tight joint therebetween.

2. A method according to Claim 1 including the step of honing the tube to remove deposits therein prior to the insertion of the rotary cutting tool (101).

3. A method according to Claim 1 or Claim 2 including the step of machining the exposed end of the existing tube to a 40-50° angle prior to the insertion of the replacement tube (20) into the tubesheet opening.

4. A method according to any preceding Claim including the step of stress relieving the welded joint between the existing tube end and the replacement tube.

5. A method according to any preceding Claim including the step of swaging the inner end of the replacement tube (20) prior to insertion into the existing tube end.

6. A method according to any preceding Claim wherein the tube wall is circumferentially severed using a rotary cutting tool (101) comprising:

(a) an elongated main body (102) having a central portion, a reduced diameter front end portion (103), a reduced diameter rear portion (102a), and a rear neck portion, the body having at least one narrow longitudinal groove (105) formed therein;

(b) a cutting blade (106) provided within said at least one groove (105), the blade being pivotally attached at its rearward end to the central portion of the main body (102);

(c) a cylindrical collar (111) located around the rear portion of the main body (102) and being slidable relative to the body, the collar being in contact with the rearward end of said at least one cutting blade (106);

(d) first spring means (108) located in said at least one groove (105) between the groove bottom and the cutting blade (106) therein, the first spring means urging the blade outwardly from the body (102);

(e) a shaft (110) connected to the rear neck portion of the body (102);

(f) second spring means (112) encircling the rear neck portion of the body (102) and located between the cylindrical collar (111) and the shaft (110) for limiting the outward pivotal movement of said at least one cutting blade (106); and

(g) actuating means attached to the main body rear portion (102a) for imparting axial movement to the cylindrical collar (111), whereby the tool body front end portion (103) can be remotely inserted into a tube end and said at least one cutting blade (106) pivotally adjusted to contact the outer side of the tube, after which the cutting tool is rotated to machine the tube end to a desired shape.

7. A method according to Claim 6 wherein the body (102) of the rotary cutting tool is formed with three grooves (105), with a cutting blade (106) pivotally mounted in each groove.

8. A method according to Claim 6 or Claim 7 wherein the actuating means comprises a piston (122) connected to an elongated sleeve (117) axially slidable relative to the shaft (110) to control the position of the collar (111).

9. A method according to any preceding Claim wherein the replacement tube is positioned relative to the existing tube end using a tool (210) comprising:

(a) a main body (211) having a cylindrical bore therein and containing dual connections (229,231) spaced apart longitudinally and extending into the bore, and a divider (230) provided within the bore between the dual connections;

(b) a rear piston (226) slidably interfitting partially within the rear portion of the bore in said main body (211), the rear portion (226) having a pressure connection (219) and an elongated inner tube unit (220) attached thereto, the inner tube unit extending forwardly through the divider (230) and main body (211) and being rigidly connected at its forward end to a tapered nosepiece (223);

(c) a forward piston (232) slidably located within the body bore and slidably enclosing the elongated inner tube unit (220), the forward piston (232) having a retainer collar (233) attached thereto and enclosing a resilient clamping mandrel (234) located between the main body forward end and said retainer (233); and

(d) a clamp body (222) provided at the forward end of said main body (211) and slidably fitted over said inner tube (220), the clamp body (222) being attached at its forward end to a collet clamp (224) located between the clamp body (222) and the tapered nosepiece (223), whereby the clamp body and collet can be inserted into a replacement tube (212) for axially moving the replacement tube forward toward the annular collet clamp (224) when anchored in an existing tube (213).

10. A method according to Claim 9 wherein the replacement tube (212) is positioned relative the existing tube end (213) by pressurising the inner tube unit (220) to 34.5-137.9 bar gauge (500-2000 psig) and withdrawing the nosepiece (223) into a concentric tube collet clamp (224) and thereby expanding the collet clamp (224) to contact the existing tube inner wall;

pressurising the rear piston (226) to 34.5-137.9 bar gauge (500-2000 psig) and moving the replacement tube (212) axially forward into axial engagement with the end of the existing tube (213); pressurizing the forward piston (232) to 34.5-137.9 bar gauge (500-2000 psig) to clamp the tool resilient mandrel (234) firmly against the inner surface of the replacement tube (212) and thereby expand the replacement tube (212) into a tubesheet; and

releasing the pressure at the inner tube unit (221) and the body pistons (226,232) and withdrawing the tool (210) from the tubes.

11. A method according to any preceding Claim wherein the tube ends are expanded using a tool (310) comprising:

(a) an elongate central shaft (311) for insertion into a tube, the shaft being attached at its forward end to a cylinder (316) containing a front piston (315) axially movable therein;

(b) a collet (313) attached to the forward end of the cylinder (316), the collet having multiple radially expandable fingers (313a) at its forward end;

(c) a cylindrical mandrel (314) rigidly attached to the forward end of the piston (315) and slidably received in said collet fingers;

(d) a retractor piston (317) threadably attached to the rear end of the central shaft (311), and slidable within a retractor housing (318); and

(e) an elongate tube (320) centrally disposed within the shaft (311) and the retractor piston (317), the tube being adapted for supplying fluid pressure to the rear end of the front piston (315), whereby the mandrel (314) can be forced forward into the collet fingers (313a) so as to radially expand the fingers and thereby radially expand the tube end.

12. A method according to Claim 11 wherein a compression spring (324) is disposed between retractor piston (317) and a rear end fitting (320b) threadably attached to said housing.

**Revendications**

1. Procédé de retrait et de remplacement à distance d'une partie d'extrémité de tube fixée à une plaque tubulaire (10) d'un échangeur de chaleur, comprenant les étapes qui consistent :

(a) à insérer un outil de coupe rotatif (101) dans une partie d'extrémité de tube et à sectionner circonférentiellement la paroi du tube en un emplacement sélectionné au voisinage de la plaque tubulaire;

(b) à éliminer un joint de soudure (15) situé entre la partie d'extrémité de tube et la plaque tubulaire (10);

(c) à retirer la partie d'extrémité de tube (16a) en la faisant sortir à travers l'ouverture de la plaque tubulaire (10) qui l'entoure;

(d) à insérer un nouveau tube de remplacement (20) dans l'ouverture de la plaque tubulaire et à positionner axialement le nouveau tube dans l'alignement axial de l'extrémité (16b) du tube existant et suivant une relation d'emboîtement mutuel avec celle-ci;

(e) à élargir l'extrémité externe du nouveau tube (20) fermement contre l'ouverture de la plaque tubulaire qui l'entoure, de façon à maintenir le nouveau tube en place;

(f) à élargir l'extrémité interne du tube de remplacement (20) dans l'extrémité (16b) du tube existant;

(g) à souder l'extrémité interne du nouveau tube à l'extrémité du tube existant afin de créer un joint étanche à la pression entre eux; et

(h) à souder l'extrémité externe du nouveau tube à la plaque tubulaire afin de créer un joint étanche à la pression entre eux.

2. Procédé selon la revendication 1, comprenant l'étape consistant à pierrer le tube pour éliminer les dépôts se trouvant à l'intérieur de celui-ci, avant l'insertion de l'outil de coupe rotatif (101).

3. Procédé selon la revendication 1 ou la revendication 2, comprenant l'étape consistant à usiner l'extrémité à nu du tube existant jusqu'à un angle de 40 à 50°, avant l'insertion du tube de remplacement (20) dans l'ouverture de la plaque tubulaire.

4. Procédé selon l'une quelconque des revendications précédentes, comprenant l'étape consistant à opérer un relâchement des tensions sur le joint soudé entre l'extrémité du tube existant et le tube de remplacement.

5. Procédé selon l'une quelconque des revendications précédentes, comprenant l'étape consistant à rétreindre l'extrémité interne du tube de remplacement (20), avant l'insertion dans l'extrémité du tube existant.

6. Procédé selon l'une quelconque des revendications précédentes, dans lequel la paroi du tube est sectionnée circonférentiellement à l'aide d'un outil de coupe rotatif (101) comprenant:

(a) un corps principal allongé (102) ayant une partie centrale, une partie d'extrémité avant de diamètre réduit (103), une partie arrière de diamètre réduit (102a), et une partie de col arrière, au moins une rainure longitudinale étroite (105) étant formée dans le corps;

(b) une lame de coupe (106) prévue dans ladite rainure au nombre d'au moins une (105), la lame étant reliée à pivotement au niveau de son extrémité arrière à la partie centrale du corps principal (102);

(c) un collier cylindrique (111) situé autour de la partie arrière du corps principal (102) et apte à coulisser relativement au corps, le collier étant en contact avec l'extrémité arrière de ladite lame de coupe au nombre d'au moins une (106);

(d) des premiers moyens formant ressort (108) situés dans ladite rainure au nombre d'au moins une (105) entre le fond de la rainure et la lame de coupe (106) placée à l'intérieur de celle-ci, les premiers moyens formant ressort poussant la lame vers l'extérieur du corps (102);

(e) un arbre (110) relié à la partie de col arrière du corps (102);

(f) des seconds moyens formant ressort (112) encerclant la partie de col arrière du corps (102) et situés entre le collier cylindrique (111) et l'arbre (110) afin de limiter le mouvement de pivotement vers l'extérieur de ladite lame de coupe au nombre d'au moins une (106); et

(g) des moyens d'actionnement fixés à la partie arrière (102a) du corps principal en vue d'imprimer un mouvement axial au collier cylindrique (111), pour que la partie d'extrémité avant (103) du corps de l'outil puisse être insérée à distance dans une extrémité de tube et que ladite lame de coupe au nombre d'au moins une (106) puisse être positionnée par pivotement de façon à venir au contact du côté externe du tube, après quoi l'outil de coupe est entraîné en rotation afin d'usiner l'extrémité du tube sous une forme voulue.

7. Procédé selon la revendication 6, dans lequel le corps (102) de l'outil de coupe rotatif est doté de trois rainures (105), une lame de coupe (106) étant montée à pivotement dans chaque rainure.

8. Procédé selon la revendication 6 ou la revendication 7, dans lequel les moyens d'actionnement comprennent un piston (122) relié à un manchon allongé (117) apte à coulisser axialement relativement à l'arbre (110) en vue de commander la position du collier (111).

9. Procédé selon l'une quelconque des revendications précédentes, dans lequel le tube de remplacement est positionné relativement à l'extrémité de tube existant à l'aide d'un outil (210) comprenant:

(a) un corps principal (211) dans lequel est prévu un alésage cylindrique et contenant deux raccords (229, 231) espacés l'un de l'autre longitudinalement et s'étendant à l'intérieur de l'alésage, et un diviseur (230) prévu à l'intérieur de l'alésage entre les deux raccords;

(b) un piston arrière (226) s'emboîtant partiellement, par coulissement, dans la partie arrière de l'alésage dudit corps principal (211), la partie arrière (226) comportant un raccord de pression (219) et une unité de tube interne allongée (220) fixée à celui-ci, l'unité de tube interne s'étendant vers l'avant à travers le diviseur (230) et le corps principal (211) et étant reliée rigidement au niveau de son extrémité avant à un nez effilé (223);

(c) un piston avant (232) logé à coulissement à l'intérieur de l'alésage du corps et enfermant à coulissement l'unité de tube interne allongée (220), le piston avant (232) ayant un collier de retenue (233) qui y est fixé et enfermant un mandrin de serrage résilient (234) situé entre l'extrémité avant du corps principal et ledit collier de retenue (233); et

(d) un corps de serrage (222) prévu au niveau de l'extrémité avant dudit corps principal (211) et ajusté à coulissement autour dudit tube interne (220), le corps de serrage (222) étant fixé au niveau de son extrémité avant à un collet de serrage (224) situé entre le corps de serrage (222) et le nez effilé (223), si bien que le corps de serrage et le collet peuvent être insérés dans un tube de remplacement (212) en vue de déplacer axialement le tube de remplacement vers l'avant en direction du collet de serrage annulaire (224) une fois qu'il a été ancré dans un tube existant (213).

10. Procédé selon la revendication 9, dans lequel on positionne le tube de remplacement (212) relativement à l'extrémité (213) du tube existant en mettant sous pression l'unité de tube interne (220) jusqu'à une pression de 34,5-137,9 bar (500-2000 psig) et en tirant le nez (223) jusque dans un collet de

14

EP 0 234 920 B1

serrage tubulaire concentrique (224), et en élargissant ainsi le collet de serrage (224) pour qu'il entre en contact avec la paroi interne du tube existant; en mettant sous pression le piston arrière (226) jusqu'à une pression de 34,5-137,9 bar (500-2000 psig) et en déplaçant le tube de remplacement (212) axialement vers l'avant pour qu'il vienne axialement en prise avec l'extrémité du tube existant (213); en mettant sous pression le piston avant (232) jusqu'à une pression de 34,5-137,9 bar (500-2000 psig) pour serrer le mandrin résilient (234) de l'outil fermement contre la surface interne du tube de remplacement (212) et élargir ainsi le tube de remplacement (212) à l'intérieur d'une plaque tubulaire; et en libérant la pression au niveau de l'unité de tube interne (221) et des pistons (226,232) du corps et en retirant l'outil (210) hors des tubes.

11. Procédé selon l'une quelconque des revendications précédentes, dans lequel les extrémités de tube sont élargies à l'aide d'un outil (310) comprenant:

(a) un arbre central allongé (311) à insérer dans un tube, l'arbre étant fixé au niveau de son extrémité avant à un cylindre (316) contenant un piston avant (315) mobile axialement à l'intérieur de celui-ci;

(b) un collet (313) fixé à l'extrémité avant du cylindre (316), le collet comportant des doigts multiples radialement expansibles (313a) à son extrémité avant;

(c) un mandrin cylindrique (314) fixé rigidement à l'extrémité avant du piston (315) et reçu à coulissement dans lesdits doigts du collet;

(d) un piston rétracteur (317) fixé par vissage à l'extrémité arrière de l'arbre central (311), et apte à coulisser à l'intérieur d'un logement de rétraction (318); et

(e) un tube allongé (320) disposé centralement à l'intérieur de l'arbre (311) et du piston rétracteur (317), le tube étant conçu pour fournir une pression de fluide à l'extrémité arrière du piston avant (315), si bien que le mandrin (314) peut être forcé vers l'avant, à l'intérieur des doigts de collet (313a) de façon à déployer radialement les doigts et élargir ainsi radialement l'extrémité du tube.

12. Procédé selon la revendication 11, dans lequel un ressort de compression (324) est disposé entre le piston rétracteur (317) et un raccord d'extrémité arrière (320b) fixé par vissage audit logement.

## Patentansprüche

1. Verfahren zum Fernentnehmen und Ersetzen eines an einer Rohrplatte (10) eines Wärmeaustauschers befestigten Rohrendabschnitts,
**gekennzeichnet durch**
folgende Schritte:

a) Einsetzen eines Drehschneidwerkzeugs (101) in einen Rohrendabschnitt und Abtrennen der Rohrwand in Umfangsrichtung an einer ausgewählten Stelle nahe der Rohrplatte,

b) Entfernen einer Schweißnaht (15) zwischen dem Rohrendabschnitt und der Rohrplatte (10),

c) Herausziehen des Rohrendabschnitts (16a) aus der umgebenden Öffnung in der Rohrplatte (10),

d) Einsetzen eines neuen Ersatzrohres (20) in die Öffnung der Rohrplatte und axiales Positionieren des neuen Rohres in axialer Ausrichtung und in Eingriff mit dem existierenden Rohrende (16b),

e) Expandieren des äußeren Endes des neuen Rohres (20) fest in die umgebende Rohrplattenöffnung, um das neue Rohr in Position zu halten,

f) Expandieren des inneren Endes des Ersatzrohres (20) in das existierende Rohrende (16b),

g) Anschweißen des inneren Endes des neuen Rohres an dem existierenden Rohrende, um eine druckdichte Verbindung zwischen beiden zu schaffen, und

h) Anschweißen des äußeren Endes des neuen Rohres an der Rohrplatte, um eine druckdichte Verbindung zu schaffen.

2. Verfahren nach Anspruch 1,
ferner **gekennzeichnet durch**
den Schritt des Honens des Rohres, um Ablagerungen darin zu entfernen, bevor das Drehschneidwerkzeug (101) eingesetzt wird.

3. Verfahren nach Anspruch 1 oder 2,
gekennzeichnet durch den Schritt der Bearbeitung des freiliegenden Endes des existierenden Rohres auf einen Winkel von 40 bis 50°, bevor das Ersatzrohr (20) in die Rohrplattenöffnung eingesetzt wird.

15

EP 0 234 920 B1

**4.** Verfahren nach einem der vorhergehenden Ansprüche,
ferner gekennzeichnet durch den Schritt der Spannungsentlastung der Schweißverbindung zwischen dem existierenden Rohrende und dem Ersatzrohr.

**5.** Verfahren nach einem der vorher gehenden Ansprüche,
gekennzeichnet durch den Schritt des Einschnürens des inneren Endes des Ersatzrohres (20) vor dem Einsetzen in das Ende des existierenden Rohres.

**6.** Verfahren nach einem der vorhergehenden Ansprüche,
dadurch gekennzeichnet, daß die Rohrwand in Umfangsrichtung unter Verwendung eines Drehwerkzeugs (101) abgetrennt wird, welches folgende Teile aufweist:
a) einen langgestreckten Hauptkörper (102) mit einem Mittelabschnitt, einem vorderen Endabschnitt verringerten Durchmessers (103), einen rückwärtigen Abschnitt verringerten Durchmessers (102a) und einem rückwärtigen Halsabschnitt, wobei der Körper wenigstens eine schmale längliche Nut (105) enthält,
b) eine Schneidklinge (106) innerhalb der wenigstens einen Nut (105), die schwenkbar an ihrem rückwärtigen Ende an dem mittleren Teil des Hauptkörpers (102) befestigt ist,
c) einen zylindrischen Ring (111), der um den rückwärtigen Abschnitt des Hauptkörpers (102) angeordnet und relativ zu dem Körper verschieblich ist und in Kontakt mit dem rückwärtigen Ende mit der wenigstens einen Schneidklinge (106) steht,
d) eine erste Federeinrichtung (108) in der wenigstens einen Nut (105) zwischen dem Nutboden und der Schneidklinge (106), wobei die erste Federeinrichtung die Klinge von dem Körper (102) nach außen drückt,
e) einen mit dem rückwärtigen Halsabschnitt des Körpers (102) verbundenen Schaft (110),
f) eine zweite Federeinrichtung (112), die den rückwärtigen Halsabschnitt des Körpers (102) umgibt und zwischen dem zylindrischen Ring (111) und dem Schaft (110) angeordnet ist, um die nach außen gerichtete Schwenkbewegung der wenigstens einenSchneidklinge (106) zu begrenzen, und
g) eine Betätigungseinrichtung, die an dem rückwärtigen Abschnitt (102a) des Hauptkörpers befestigt ist, um eine axiale Bewegung auf den zylindrischen Ring (111) auszuüben, wodurch der vordere Endabschnitt (103) des Werkzeugkörpers in das Rohrende fern eingesetzt und die wenigstens eine Schneidklinge (106) schwenkbar eingestellt werden kann, um an der Außenseite des Rohres anzuliegen, wonach das Schneidwerkzeug gedreht wird, um das Rohrende auf eine gewünschte Form zu bearbeiten.

**7.** Verfahren nach Anspruch 6, dadurch gekennzeichnet, daß der Körper (102) des Dreh schneidwerkzeugs drei Nuten (105) aufweist, wobei in jeder Nut eine Schneidklinge (106) schwenkbar befestigt ist.

**8.** Verfahren nach Anspruch 6 oder 7,
dadurch gekennzeichnet, daß die Betätigungseinrichtung einen Kolben (122) aufweist, der mit einer langgestreckten Hülse (117) verbunden ist, die gegenüber dem Schaft (110) axial verschieblich ist, um die Position des Ringes (111) zu steuern.

**9.** Verfahren nach einem der vorhergehenden Ansprüche,
dadurch gekennzeichnet, daß das Ersatzrohr relativ zu dem existierenden Rohrende unter Verwendung eines Werkzeugs (210) positioniert wird, welches folgende Teile aufweist:
a) einen Hauptkörper (211) mit einer zylindrischen Bohrung und doppelten Anschlüssen (229, 231), die in Längsrichtung beabstandet sind und sich in die Bohrung erstrecken, wobei zwischen den doppelten Anschlüssen innerhalb der Bohrung ein Trennkörper (230) sitzt,
b) einen rückwärtigen Kolben (226), der teilweise innerhalb des rückwärtigen Abschnitts der Bohrung in dem Hauptkörper (211) verschieblich sitzt, wobei der rückwärtige Abschnitt (226) einen Druckanschluß (219) und eine daran befestigte langgestreckte Innenrohreinheit (220) aufweist, die sich nach vorne durch den Trennkörper (230) und den Hauptkörper (211) erstreckt und an ihrem vorderen Ende fest mit einem abgeschrägten Kopfstück (223) verbunden ist,
c) einen Vorwärtskolben (232), der verschieblich innerhalb der Körperbohrung sitzt und die langgestreckte Innenrohreinheit (220) verschieblich einschließt und der einen Haltering (233) enthält, der daran befestigt ist und einen elastischen Klemmstopfen (234) einschließt, der zwischen dem vorderen Ende des Hauptkörpers und dem Haltering (233) angeordnet ist, und

16

d) einen Klemmkörper (222) an dem vorderen Ende des Hauptkörpers (211), der verschieblich auf dem inneren Rohr-(220) sitzt und an seinem vorderen Ende an einer Klemmhülse (224) befestigt ist, die zwischen dem Klemmkörper (222) und dem abgeschrägten Kopfstück (223) angeordnet ist, wobei der Klemmkörper und die Klemmhülse in ein Ersatzrohr (212) eingeführt werden können, um das Ersatzrohr axial vorwärts in Richtung der ringförmigen Klemmhülse (224) zu bewegen, wenn es in einem existierenden Rohr (213) verankert wird.

10. Verfahren nach Anspruch 9,
dadurch gekennzeichnet, daß das Ersatzrohr (212) relativ zu dem existierenden Rohrende (213) positioniert wird, indem die innere Rohreinheit (220) auf 34,5 bis 137,9 bar (500 bis 2000 psig) unter Druck gesetzt wird und das Kopfstück (223) in eine konzentrische Rohrklemmhülse (224) gezogen wird, wodurch die Klemmhülse (24) expandiert wird und in Kontakt mit der Innenwand des existierenden Rohres gerät,
daß der rückwärtige Kolben (226) mit 34,5 bis 137,9 bar (500 bis 2000 psig) unter Druck gesetzt wird und das Ersatzrohr (212) axial vorwärts in axialen Eingriff mit dem Ende des existierenden Rohres (213) bewegt,
daß der vordere Kolben (232) auf 34,5 bis 137,9 bar (500 bis 2000 psig) unter Druck gesetzt wird, um den elastischen Stopfen (234) fest gegen die Innenfläche des Ersatzrohres (212) zu klemmen und dadurch das Ersatzrohr (212) in eine Rohrplatte zu expandieren,
und daß der Druck an der inneren Rohreinheit (221) und den Kolben (226, 232) freigegeben und das Werkzeug (210) aus den Rohren herausgezogen wird.

11. Verfahren nach einem der vorhergehenden Ansprüche,
dadurch gekennzeichnet, daß die Rohrenden unter Verwendung eines Werkzeugs (310) expandiert werden, welches folgende Teile aufweist:
a) einen langgestreckten, mittigen Schaft (311) zum Einsetzen in ein Rohr, wobei der Schaft an seinem vorderen Ende an einem Zylinder (316) befestigt ist, der einen axial beweglichen vorderen Kolben (315) aufweist,
b) eine Klemmhülse (313), die an dem vorderen Ende des Zylinders (316) befestigt ist und mehrere radial ausweitbare Finger (313a) an ihrem vorderen Ende hat,
c) einen zylindrischen Dorn (314), der fest an dem vorderen Ende des Kolbens (315) befestigt ist und verschieblich in die Klemmhülsenfinger aufgenommen ist,
d) einen Rückzugkolben (317), der an dem rückwärtigen Ende des mittigen Schaftes (311) angeschraubt ist und verschieblich innerhalb eines Rückzuggehäuses (318) sitzt und
e) ein langgestrecktes Rohr (320), das mittig innerhalb des Schaftes (311) und des Rückzugkolbens (317) angeordnet ist und dem rückwärtigen Ende des vorderen Kolbens (315) Fluiddruck zuführen kann, wodurch der Dorn (314) nach vorne in die Klemmhülsenfinger (313a) gezwängt werden kann, um die Finger radial aufzuweiten und um dadurch das Rohrende zu expandieren.

12. Verfahren nach Anspruch 11,
dadurch gekennzeichnet, daß eine Kompressionsfeder (324) zwischen dem Rückzugkolben (317) und einem rückwärtigen Endverbundstück (320) angeordnet ist, welches an dem Gehäuse angeschraubt ist.

17

STEP 1 — CLEAN INSIDE OF DETERIORATED TUBE END

STEP 2 — REMOTELY SEVER AND REMOVE DETERIORATED TUBE END

STEP 3 — PREPARE ENDS OF EXISTING TUBE USING ROTARY CUTTING TOOL

STEP 4 — REMOTELY INSERT AND POSITION REPLACEMENT TUBE USING TUBE POSITIONING TOOL

STEP 5 — EXPAND INNER SWAGED END OF REPLACEMENT TUBE INTO EXISTING TUBE USING TUBE EXPANDER TOOL

STEP 6 — WELD REPLACEMENT TUBE TO EXISTING TUBE END AND TUBE SHEET

STEP 7 — STRESS RELIEVE AND TEST WELDS FOR REPLACEMENT TUBE

FIG.1

FIG.2

FIG.3

FIG.4

FIG. 5

EP 0 234 920 B1

EP 0 234 920 B1

FIG. 6

106

107

107

102

106

107

FIG. 7

102  105a  103

105b

FIG. 8

106  105  104

108

111  103

23

FIG. 9

EP 0 234 920 B1

FIG. 10

FIG. 11

FIG. 12

FIG. 13